# EUROPEAN PATENT APPLICATION

(11) **EP 2 685 730 A1**
(43) Date of publication of application: **15.01.2014**
(21) Application number: 12792738.2
(22) Date of filing: 17.05.2012
(51) Int. Cl.: H04N 13/00, H04N 5/91, H04N 5/92, H04N 7/26

(54) **PLAYBACK DEVICE, PLAYBACK METHOD, AND PROGRAM**

(30) Priority: 27.05.2011 JP 2011118740
(71) Applicant: Sony Corporation, Tokyo 108-0075 (JP)
(72) Inventor: HAMADA, Toshiya, Tokyo 108-0075 (JP); ARIDOME, Kenichiro, Tokyo 108-0075 (JP); MAE, Atsushi, Tokyo 108-0075 (JP)
(74) Representative: Robinson, Nigel Alexander Julian
(86) International application number: PCT/JP2012/062639
(87) International publication number: WO 2012/165160

(57) **Abstract**

The present technology relates to a reproduction device, a reproduction method, and a program, which are able to control the processing of H.264/MPEG-4 MVC encoded data in accordance with the value of a flag.

A reproduction device of one aspect of the present technology is provided with: a setting unit which sets a value to a flag that indicates whether or not the reproduction device itself is a device that is capable of decoding H.264/MPEG-4 MVC encoded data; and a reproduction control unit which controls reproduction of H.264/MPEG-4 MVC encoded data in accordance with the value of the flag, and outputs, to a display device, images obtained by reproduction.

## Description

### TECHNICAL FIELD

The present technology relates to a reproduction device, a reproduction method, and a program, which are able to control the processing of, in particular, H.264/MPEG-4 MVC encoded data in accordance with the value of a flag.

### BACKGROUND ART

In recent years, 3D content in which stereoscopically viewable images are recorded has been attracting attention. Data for left-eye images (L images) and right-eye images (R images) is included in the video data of 3D content. There is a displacement, which corresponds to parallax, between a subject captured in an L image and the subject captured in an R image.

For example, an L image and an R image in which parallax has been set are alternately displayed, and are respectively sent to the left eye and the right eye of a user wearing active shutter glasses, and it therefore becomes possible for the subject to be perceived three-dimensionally.

### CITATION LIST

### PATENT DOCUMENT

Patent Document 1: JP 2007-280516 A

### SUMMARY OF THE INVENTION

### PROBLEMS TO BE SOLVED BY THE INVENTION

H.264/MPEG-4 MVC serves as an encoding system for L images and R images. In H.264/MPEG-4 MVC, for L images and R images respectively, encoding at 1080/60i (1920 × 1080 pixel size, 59.94 fields/second interlace system) or 1080/50i (1920 x 1080 pixel size, 50 fields/second interlace system) is possible, but there are not many reproduction devices that are capable of decoding encoded data obtained by encoding L images and R images by means of H.264/MPEG-4 MVC at 1080/60i or 1080/50i.

As reproduction devices that are capable of decoding H.264/MPEG-4 MVC encoded data, there are 3D BD-ROM (Blu-ray (trademark) Disc read-only memory) compatible players, but the decoding of L images and R images at 1080/60i and 1080/50i is not standardized in 3D BD-ROM. Consequently, with conventional 3D BD-ROM compatible players, it is not possible to decode encoded data obtained by encoding L images and R images by means of H.264/MPEG-4 MVC at 1080/60i or 1080/50i.

In addition, even if a reproduction device were capable of decoding encoded data obtained by carrying out encoding by means of H.264/MPEG-4 MVC at 1080/60i or 1080/50i, it would not be possible to display stereoscopic images in the case where a display device that is not capable of receiving stereoscopic images in the frame sequential format configured at 1080/60i or 1080/50i is connected.

It should be noted that the receiving of stereoscopic images in the frame sequential format configured at 1080/60i or 1080/50i in the present invention refers to, for example, when connected by means of HDMI, the receiving of 1080/60i or 1080/50i stereoscopic images by means of the frame packing for interlaced format or the field alternative format defined in the HDMI standards.

The present technology takes this kind of situation into consideration, and makes it possible to control the processing of H.264/MPEG-4 MVC encoded data in accordance with the value of a flag.

### SOLUTIONS TO PROBLEMS

A reproduction device according to one aspect of the present technology includes: a setting unit which sets a value to a flag that indicates whether or not the reproduction device itself is a device that is capable of decoding H.264/MPEG-4 MVC encoded data; and a reproduction control unit which controls reproduction of H.264/MPEG-4 MVC encoded data in accordance with the value of the flag, and outputs, to a display device, images obtained by reproduction.

The flag is information of 1 bit, and the setting unit may set a value of 0 to the flag in the case where the reproduction device itself is a device that is not capable of decoding H.264/MPEG-4 MVC encoded data, and set a value of 1 to the flag in the case where the reproduction device itself is a device that is capable of decoding H.264/MPEG-4 MVC encoded data.

The reproduction device may further include a decoding unit that is compatible with H.264/MPEG-4 MVC. In the case where the value of the flag indicates being a device that is capable of decoding H.264/MPEG-4 MVC encoded data, the reproduction control unit may cause H.264/MPEG-4 MVC encoded data to be decoded by the decoding unit.

The reproduction device may further include a decoding unit that is not compatible with H.264/MPEG-4 MVC and is compatible with H.264/AVC. In the case where the value of the flag indicates being a device that is not capable of decoding H.264/MPEG-4 MVC encoded data, the reproduction control unit may cause a base-view video stream included in H.264/MPEG-4 MVC encoded data to be decoded by the decoding unit.

In the case where the reproduction device itself is a device that is capable of decoding H.264/MPEG-4 MVC encoded data, and the display device is a device that is capable of receiving stereoscopic images in a frame sequential format, the setting unit may set, to the flag, a value indicating being a device that is capable of decoding H.264/MPEG-4 MVC encoded data.

In the case where the reproduction device itself is a device that is capable of decoding H.264/MPEG-4 MVC encoded data, but the display device is a device that is not capable of displaying stereoscopic images in the frame sequential format, when the reproduction device itself is capable of converting stereoscopic images in the frame sequential format to stereoscopic images of a predetermined format that the display device is able to receive, the setting unit may set, to the flag, a value indicating being a device that is capable of decoding H.264/MPEG-4 MVC encoded data.

The reproduction device may further include: a decoding unit that is compatible with H. 264/MPEG-4 MVC; and a conversion unit that converts stereoscopic images in the frame sequential format to stereoscopic images of the predetermined format. In the case where the value of the flag indicates being a device that is capable of decoding H.264/MPEG-4 MVC encoded data, the reproduction control unit may cause H.264/MPEG-4 MVC encoded data to be decoded by the decoding unit, and cause stereoscopic images in the frame sequential format obtained by means of the decoding performed by the decoding unit to be converted to stereoscopic images of the predetermined format by the conversion unit.

The reproduction device may further include an acquisition unit which acquires H. 264/MPEG-4 MVC encoded data from an imaging device that captures stereoscopic images and encodes the captured stereoscopic images by means of H.264/MPEG-4MVC. In this case, the reproduction control unit may control reproduction of H.264/MPEG-4 MVC encoded data acquired by the acquisition unit.

In one aspect of the present technology, a value is set to a flag that indicates whether or not a reproduction device itself is a device that is capable of decoding H.264/MPEG-4 MVC encoded data, reproduction of H.264/MPEG-4 MVC encoded data is controlled in accordance with the value of the flag, and images obtained by reproduction are output to a display device.

### EFFECTS OF THE INVENTION

According to the present technology, it is possible to control the processing of H.264/MPEG-4 MVC encoded data in accordance with the value of a flag.

### BRIEF DESCRIPTION OF DRAWINGS

Fig. 1 is a drawing depicting an exemplary configuration of a recording/reproductionsystem according to one embodiment of the present technology.
Fig. 2 is a drawing describing H.264/MPEG-4 MVC.
Fig. 3 is a block diagram depicting an exemplary configuration of a recording device.
Fig. 4 is a drawing depicting an example of 3D content.
Fig. 5 is a block diagram depicting an exemplary configuration of a reproduction device.
Fig. 6 is a block diagram depicting an exemplary functional configuration of a controller.
Fig. 7 is a drawing depicting an example of an MVC flag.
Fig. 8 is a drawing depicting an example of a player register.
Fig. 9 is a drawing depicting a configuration of a reproduction device.
Fig. 10 is a flowchart describing setting processing for an MVC flag.
Fig. 11 is a flowchart describing reproduction processing of 3D content.
Fig. 12 is a flowchart describing other setting processing for an MVC flag.
Fig. 13 is a flowchart describing other reproduction processing of 3D content.
Fig. 14 is a drawing depicting a first example of a combination of devices.
Fig. 15 is a drawing depicting a second example of a combination of devices.
Fig. 16 is a drawing depicting a third example of a combination of devices.
Fig. 17 is a block diagram depicting an exemplary configuration of a computer.

### MODE FOR CARRYING OUT THE INVENTION

A mode for carrying out the present technology is described hereafter. The description is given in the following sequence.
1. Regarding a recording/reproduction system
2. Regarding a recording device
3. Regarding a reproduction device
4. Examples of combinations of devices

### <Regarding a recording/reproduction system>

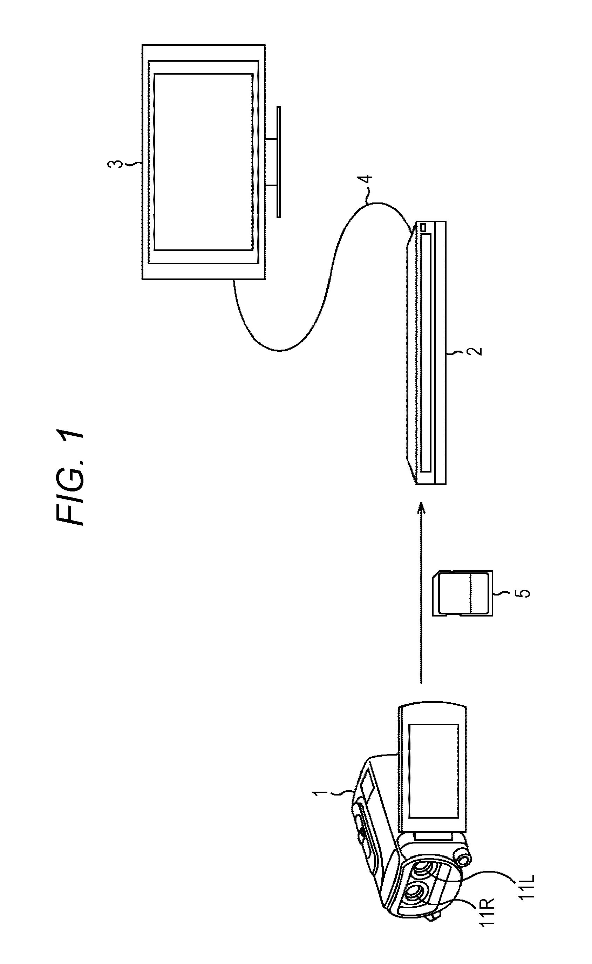

Fig. 1 is a drawing depicting an exemplary configuration of a recording/reproductionsystem according to one embodiment of the present technology.

The recording/reproduction system of Fig. 1 is configured from a recording device 1, a reproduction device 2, and a display device 3. The reproduction device 2 and the display device 3 are connected by way of a cable 4 such as a HDMI (High-Definition Multimedia Interface) cable.

The recording device 1 is a video camera that is capable of capturing and recording stereoscopic images made up of L images and R images. At the front surface of the recording device 1, from the recording device 1 toward the subject, a lens 11R is provided in the right-side position, and a lens 11L is provided in the left-side position. A right-eye camera having an optical system for generating R images on the basis of light taken in by the lens 11R, and a left-eye camera having an optical system for generating L images on the basis of light taken in from the lens 11L are provided inside the recording device 1.

The recording device 1 encodes stereoscopic images by means of H.264/MPEG-4 MVC (Multi-view Video Coding), and records in accordance with a recording format such as AVCHD (Advanced Video Codec High Definition). L images and R images are respectively encoded at 1080/60i or 1080/50i, and are recorded on a recording medium provided inside the recording device 1, or removable media 5 such as a memory card inserted in a slot provided in the recording device 1.

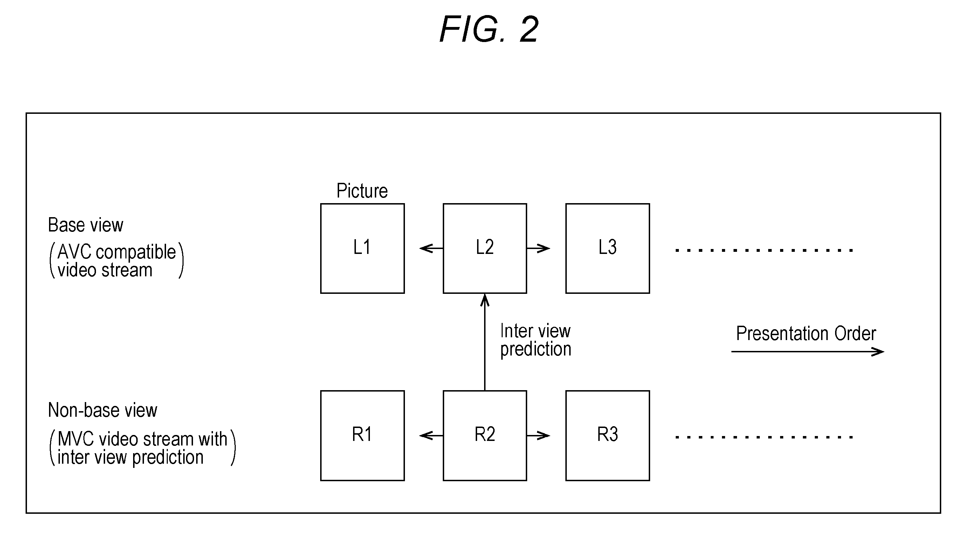

Here, H.264/MPEG-4 MVC is described with reference to Fig. 2. A video stream referred to as a base-view video stream and a video stream referred to as a non-base-view video stream are defined in H.264/MPEG-4 MVC.

The base-view video stream is a stream obtained by encoding, for example, the L images from among L images and R images by means of H.264/AVC. As depicted by the vertical-direction arrow mark of Fig. 2, predictive encoding in which a picture of another view serves as a reference image is not permitted for base-view pictures.

On the other hand, predictive encoding in which a base-view picture serves as a reference image is permitted for non-base-view pictures. In the case where encoding is carried out with, for example, R images serving as the non-base view together with L images being set as the base view, the amount of data of the non-base-view video stream, which is the video stream of R images obtained as a result of the encoding, is smaller compared to the amount of data of the base-view video stream, which is the video stream of L images.

It should be noted that, since the encoding is by means of H.264/AVC, as depicted by the horizontal-direction arrow marks in Fig. 2, time-direction predictive encoding is carried out for base-view pictures. Furthermore, time-direction predictive encoding is carried out together with inter-view prediction also for non-base-view pictures. For decoding a non-base-view picture, it is necessary for the decoding of the corresponding base-view picture that served as a referent during encoding to be finished first.

H.264/MPEG-4 MVC encoded data recorded on the recording medium provided inside the recording device 1 is provided to the reproduction device 2 by way of a USB (Universal Serial Bus) cable. Furthermore, in the case where H.264/MPEG-4 MVC encoded data is recorded on the removable media 5, that encoded data is provided to the reproduction device 2 by way of the removable media 5.

The reproduction device 2 controls the reproduction of the encoded data provided from the recording device 1, in accordance with the value of a Stereoscopic 1080/59.94i and 1080/50i Video Capability flag.

As described hereafter, the Stereoscopic 1080/59.94i and 1080/50i Video Capability flag indicates whether or not the reproduction device 2 itself is a device that is capable of decoding H.264/MPEG-4 MVC encoded data of at least either one of 1080/60i and 1080/50i. Hereafter, as appropriate, the Stereoscopic 1080/59.94i and 1080/50i Video Capability flag is referred to as the MVC flag.

The MVC flag is recorded in a predetermined region (PREG24) of a player register in which a variety of setting values relating to the reproduction function of the reproduction device 2 are recorded.

When 3D content provided from the recording device 1 is reproduced, the reproduction device 2 refers to the MVC flag, and selects whether to reproduce 2D images, or to reproduce stereoscopic images. The reproduction of 2D images is, for example, carried out by decoding only the base-view video stream included in H.264/MPEG-4 MVC encoded data. Furthermore, the reproduction of stereoscopic images is carried out by decoding both streams of the base-view video stream and the non-base-view video stream included in H.264/MPEG-4 MVC encoded data.

For example, in the case where stereoscopic images are reproduced, the reproduction device 2 outputs, to the display device 3 by way of the cable 4, L images obtained by decoding the base-view video stream, and R images obtained by decoding the non-base-view video stream, and causes these to be alternately displayed.

The display device 3 is a TV that is capable of receiving and displaying L images and R images in the frame sequential format provided from the reproduction device 2. A display device configured from an LCD (liquid crystal display) or the like is provided for the display device 3.

As a result of having set the MVC flag in advance, when 3D content is reproduced, the reproduction device 2 is able to determine the specifications of the reproduction device 2 itself on the basis of the value of the MVC flag, and control the reproduction of encoded data in accordance with the determination result.

### <Regarding a recording device>

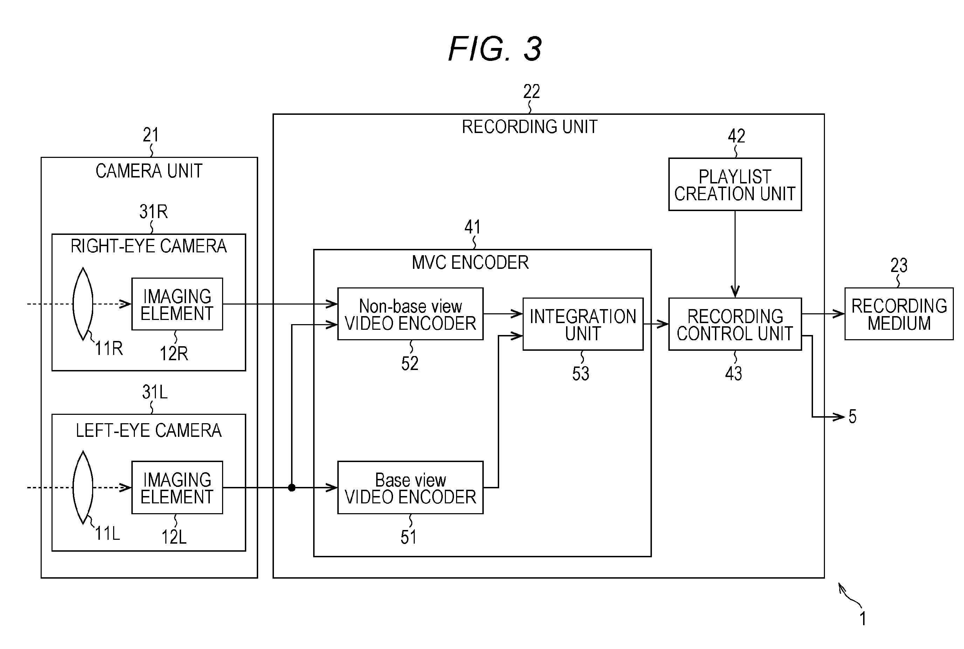

Fig. 3 is a block diagram depicting an exemplary configuration of a recording device 1. The recording device 1 is configured from a camera unit 21, a recording unit 22, and a recording medium 23.

The camera unit 21 is configured from a right-eye camera 31R and a left-eye camera 31L.

The right-eye camera 31R is configured from a lens 11R and an imaging element 12R, and photoelectric conversion of light taken in by the lens 11R is performed in the imaging element 12R. The right-eye camera 31R carries out processing such as A/D conversion with respect to a video signal obtained by carrying out photoelectric conversion, and outputs data of R images.

The left-eye camera 31L is configured from a lens 11L and an imaging element 12L, and photoelectric conversion of light taken in by the lens 11L is performed in the imaging element 12L. The left-eye camera 31L carries out processing such as A/D conversion with respect to a video signal obtained by carrying out photoelectric conversion, and outputs data of L images.

The recording unit 22 is configured from an MVC encoder 41, a playlist generation unit 42, and a recording control unit 43.

The MVC encoder 41 encodes, by means of H.264/MPEG-4 MVC, the R images captured by the right-eye camera 31R and the L images captured by the left-eye camera 31L. The MVC encoder 41 is configured from a base-view video encoder 51, a non-base-view video encoder 52, and an integration unit 53. Data of R images output from the right-eye camera 31R is input to the non-base-view video encoder 52, and data of L images output from the left-eye camera 31L is input to the base-view video encoder 51 and the non-base-view video encoder 52.

The base-view video encoder 51 encodes, by means of H.264/AVC, the L images captured by the left-eye camera 31L, and outputs the base-view video stream to the integration unit 53.

The non-base-view video encoder 52, as appropriate, uses the L images captured by the left-eye camera 31L as reference images to encode the R images captured by the right-eye camera 31R, and outputs the non-base-view video stream to the integration unit 53.

The integration unit 53 integrates the base-view video stream supplied from the base-view video encoder 51 and the non-base-view video stream supplied from the non-base-view video encoder 52, and outputs the integrated video streams to the recording control unit 43 as H.264/MPEG-4 MVC encoded data.

The playlist generation unit 42 generates and outputs, to the recording control unit 43, a playlist for stereoscopic images, which is reproduction control information for H.264/MPEG-4 MVC encoded data generated by the MVC encoder 41. Reproduction segments of the base-view video stream and the non-base-view video stream and packets and so on to be decoded are designated by means of the playlist for stereoscopic images.

The playlist generation unit 42, as appropriate, generates and outputs, to the recording control unit 43, a playlist for 2D reproduction, which is reproduction control information for the base-view video stream generated by the base-view video encoder 51. Reproduction segments of the base-view video stream and packets and so on to be decoded are designated by means of the playlist for 2D reproduction. The base-view video stream is a stream obtained by encoding by means of H.264/AVC and can therefore be reproduced independently. By using L images obtained by decoding the base-view video stream, it becomes possible to display 2D images that are not stereoscopically viewable.

The recording control unit 43 causes the H.264/MPEG-4 MVC encoded data supplied from the MVC encoder 41 and the playlist generated by the playlist generation unit 42 to be recorded on the recording medium 23 or the removable media 5 in accordance with AVCHD for example. Furthermore, the recording control unit 43 causes a navigation command, which is a program executed by the reproduction device 2 during the reproduction of 3D content, to be recorded on the recording medium 23 or the removable media 5 together with the H.264/MPEG-4 MVC encoded data and the playlist.

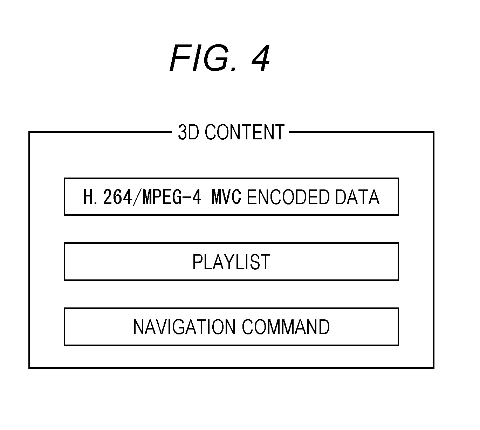

As depicted in Fig. 4, the H.264/MPEG-4 MVC encoded data that is data of stereoscopic images, the playlist, and the navigation command is recorded in the recording medium 23 or the removable media 5.

The recording medium 23 is configured from a flash memory or a hard disk or the like, and records data such as encoded data in accordance with control by the recording control unit 43.

### <Regarding a reproduction device>

### [Configuration of a reproduction device]

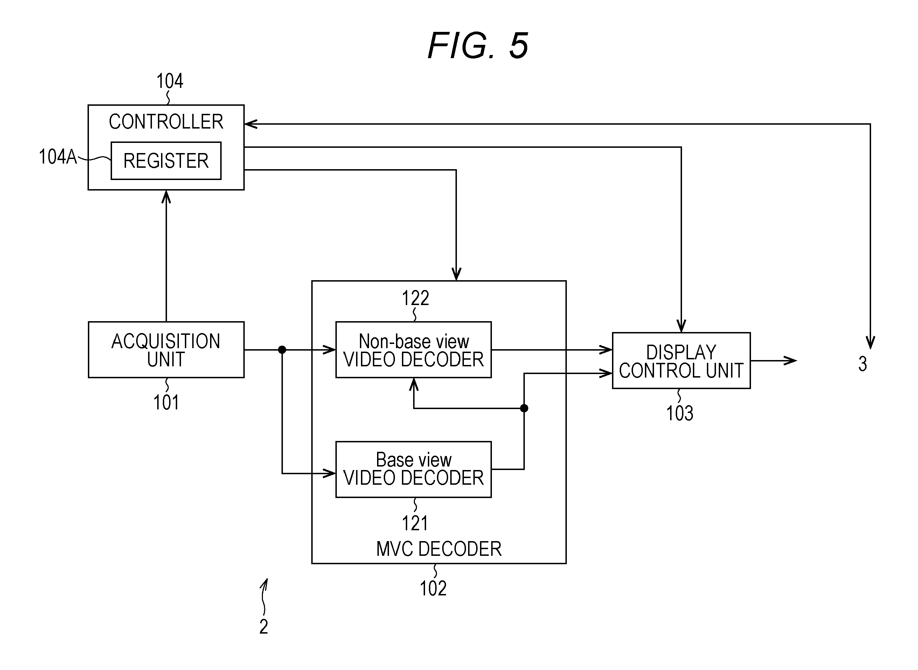

Fig. 5 is a block diagram depicting an exemplary configuration of the reproduction device 2. The reproduction device 2 is configured from an acquisition unit 101, an MVC decoder 102, a display control unit 103, and a controller 104.

The acquisition unit 101 reads out and acquires 3D content from the recording medium 23 of the recording device 1 connected by way of a USB cable, or from the removable media 5 that is inserted in a slot of the reproduction device 2. The acquisition unit 101 outputs, to the MVC decoder 102, H.264/MPEG-4 MVC encoded data included in the 3D content, and outputs the navigation command and the playlist to the controller 104.

Data of the 3D content provided from the recording device 1 may be recorded once in the recording medium inside the reproduction device 2, and the data of the 3D content may be acquired by the acquisition unit 101 from that recording medium.

The MVC decoder 102 decodes the encoded data supplied from the acquisition unit 101, in accordance with control by the controller 104. The MVC decoder 102 is configured from a base-view video decoder 121 and a non-base-view video decoder 122. The encoded data output from the acquisition unit 101 is input to the base-view video decoder 121 and the non-base-view video decoder 122 of the MVC decoder 102.

The base-view video decoder 121 decodes, by means of H.264/AVC, the base-view video stream included in the encoded data supplied from the acquisition unit 101, and outputs L images. The L images output from the base-view video decoder 121 are supplied to the non-base-view video decoder 122 and the display control unit 103.

The non-base-view video decoder 122 decodes the non-base-view video stream included in the encoded data supplied from the acquisition unit 101 with, as appropriate, the L images decoded by the base-view video decoder 121 serving as reference images, and outputs R images. The R images output from the non-base-view video decoder 122 are supplied to the display control unit 103.

The display control unit 103 outputs, to the display device 3, the L images supplied from the base-view video decoder 121 and the R images supplied from the non-base-view video decoder 122, and causes the L images and the R images to be displayed.

Furthermore, the display control unit 103, as appropriate, converts stereoscopic images in the frame sequential format made up of the L images supplied from the base-view video decoder 121 and the R images supplied from the non-base-view video decoder 122, into stereoscopic images of another format. Format conversion by the display control unit 103 is carried out in the case where the display device connected to the reproduction device 2 is different from the display device 3, and is a display device that is not compatible with the display of stereoscopic images in the frame sequential format. For example, stereoscopic images in the frame sequential format are converted to stereoscopic images in the 720p side-by-side format.

The controller 104 is configured from a CPU (central processing unit), a ROM (read-only memory), and a RAM (random-access memory) and the like, and controls all operations of the reproduction device 2 in accordance with a predetermined program. A register 104A which is a player register is provided in the controller 104.

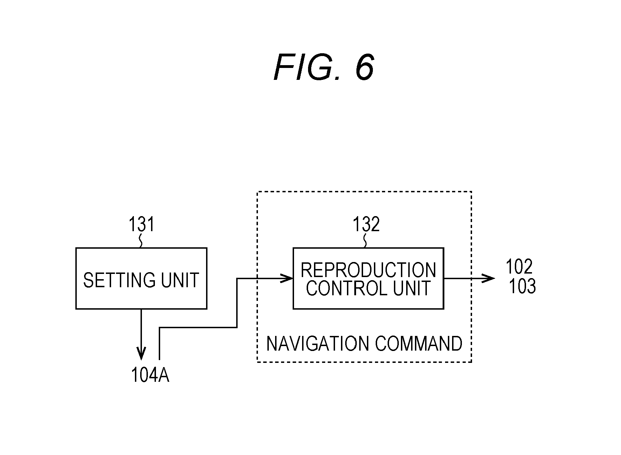

Fig. 6 is a block diagram depicting an exemplary functional configuration of the controller 104.

A setting unit 131 and a reproduction control unit 132 are realized in the controller 104. The setting unit 131 is realized by a predetermined program being executed by the CPU of the controller 104. The reproduction control unit 132 is realized by the navigation command supplied from the acquisition unit 101 being executed by the CPU of the controller 104, as indicated by the enclosing dashed line.

The setting unit 131 sets a value to the MVC flag. For example, on the basis of the function of the MVC decoder 102, the setting unit 131 sets, to the MVC flag, a value indicating that the reproduction device 2 is a device that is capable of decoding H.264/MPEG-4 MVC encoded data of at least either one of 1080/60i and 1080/50i. The setting of the MVC flag by the setting unit 131 is carried out prior to the reproduction of 3D content.

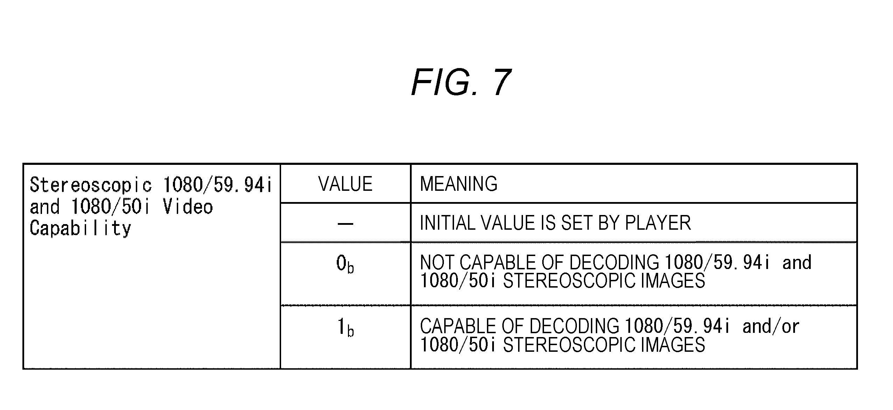

Fig. 7 is a drawing depicting an example of the MVC flag (Stereoscopic 1080/59.94i and 1080/50i Video Capability flag).

As indicated in Fig. 7, the value of the MVC flag being 0 indicates that the reproduction device 2 itself is a device that is not capable of decoding H.264/MPEG-4 MVC encoded data of 1080/60i and 1080/50i.

On the other hand, the value of the MVC flag being 1 indicates that the reproduction device 2 itself is a device that is capable of decoding H.264/MPEG-4 MVC encoded data of at least either one of 1080/60i and 1080/50i.

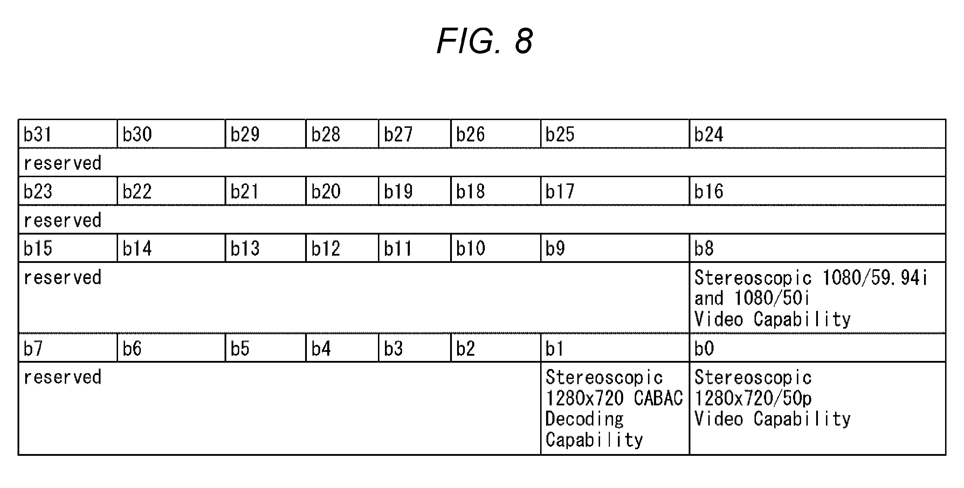

An MVC flag having this kind of meaning is recorded in the eighth bit of PREG24, which is a predetermined region of the register 104A, as depicted in Fig. 8. The value of PREG24 cannot be rewritten from the navigation command.

Returning to the description of Fig. 6, when 3D content is reproduced, the reproduction control unit 132 refers to the MVC flag recorded in the register 104A, and controls the MVC decoder 102 and the display control unit 103 in accordance with the value of the MVC flag.

The kind of configuration mentioned above is provided not just in the reproduction device 2 but also in another reproduction device that reproduces 3D content provided from the recording device 1. The other reproduction device may be a device that is capable of decoding H.264/MPEG-4 MVC encoded data of at least either one of 1080/60i and 1080/50i, or may be a device that is not capable of decoding.

Furthermore, the other reproduction device may be a device that is capable of performing format conversion for stereoscopic images in the frame sequential format obtained by decoding H.264/MPEG-4 MVC encoded data, or may be a device that is not capable of performing format conversion.

A display device connected to the other reproduction device may be a device that is capable of receiving and displaying stereoscopic images in the frame sequential format, and may be a device that is not capable of receiving stereoscopic images in the frame sequential format.

Hereafter, a reproduction device that reproduces 3D content provided from the recording device 1 is referred to as a reproduction device 2X, and a description is given in relation to the operation of a reproduction device 2X.

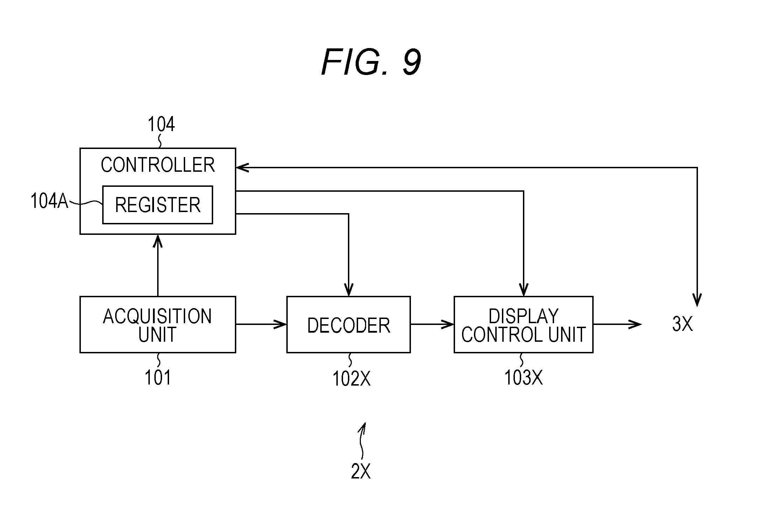

As depicted in Fig. 9, a reproduction device 2X has an acquisition unit 101, a decoder 102X, a display control unit 103X, and a controller 104. The acquisition unit 101 and the controller 104 respectively have the same functions as the acquisition unit 101 and the controller 104 of Fig. 5. In the controller 104, the setting unit 131 and the reproduction control unit 132 of Fig. 6 are realized by a predetermined program being executed.

The decoder 102X of certain reproduction devices 2X is compatible with the decoding of H.264/MPEG-4 MVC encoded data of at least either one of 1080/60i and 1080/50i, and the decoder 102X of other reproduction devices 2X is not compatible with the decoding of such encoded data. Even in the case where the decoding of H.264/MPEG-4 MVC encoded data of 1080/60i and 1080/50i is not supported, the decoder 102X is, at least, compatible with the decoding of H.264/AVC encoded data, namely the base-view video stream.

The display control unit 103X of certain reproduction devices 2X has a format conversion function for stereoscopic images in the frame sequential format, and the display control unit 103X of other reproduction devices 2X does not have a format conversion function.

Likewise, a display device connected to a reproduction device 2X is described as a display device 3X. Certain display devices 3X are devices that are capable of receiving and displaying stereoscopic images in the frame sequential format, and other display devices 3X are devices that are not capable of receiving stereoscopic images in the frame sequential format. Even in the case where stereoscopic images in the frame sequential format cannot be displayed, it is possible for stereoscopic images in the 720p side-by-side format to be received and displayed.

### [Operation of a reproduction device]

### Example 1.

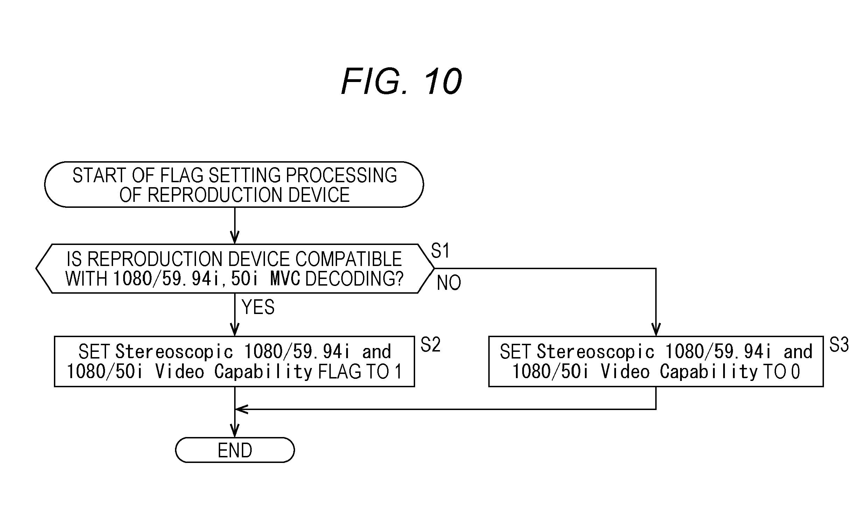

To begin, the processing of a reproduction device 2X that sets an MVC flag is described with reference to the flowchart of Fig. 10.

In step S1, the setting unit 131 of the reproduction device 2X confirms the functions of the decoder 102X, and determines whether or not the decoding of H.264/MPEG-4 MVC encoded data of at least either one of 1080/60i and 1080/50i is supported.

In the case where, in step S1, it is determined that the reproduction device 2X is compatible with the decoding of H.264/MPEG-4 MVC encoded data of at least either one of 1080/60i and 1080/50i, in step S2, the setting unit 131 sets the MVC flag to 1.

On the other hand, in the case where, in step S1, it is determined that the decoding of H.264/MPEG-4 MVC encoded data of 1080/60i and 1080/50i is not supported, in step S3, the setting unit 131 sets the MVC flag to 0. After a value has been set to the MVC flag, processing is finished.

The case where the processing of Fig. 10 is carried out by the reproduction device 2 of Fig. 5 is considered.

In this case, in step S1, it is determined that the decoding of H.264/MPEG-4 MVC encoded data of at least either one of 1080/60i and 1080/50i is supported. The MVC decoder 102 of the reproduction device 2 is a decoder that is capable of decoding H.264/MPEG-4 MVC encoded data of 1080/60i and 1080/50i. Furthermore, in step S2, 1 is set as the value of the MVC flag.

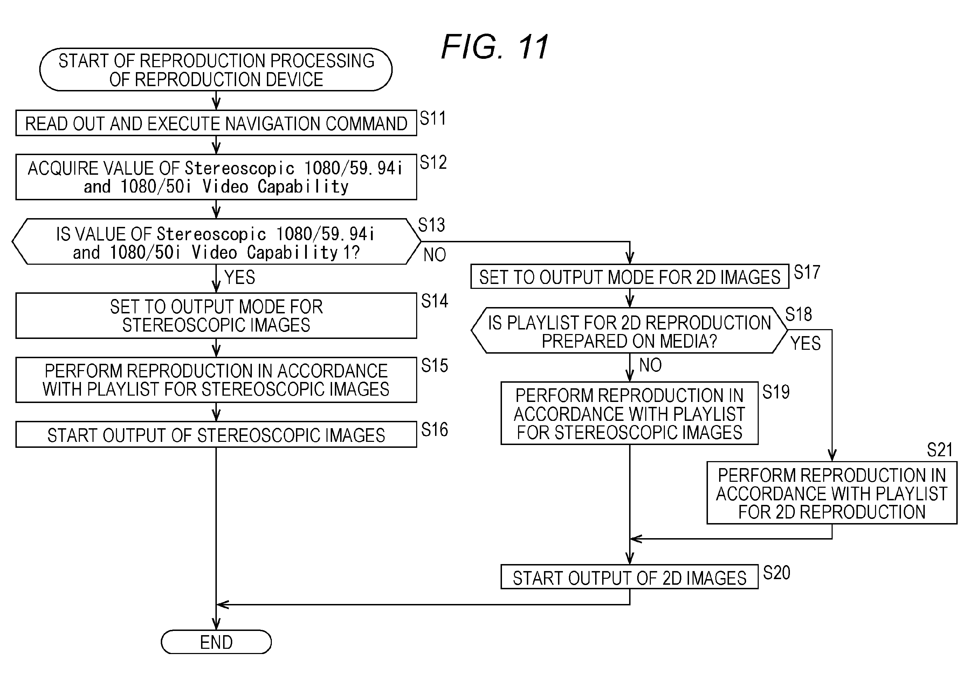

Next, the processing of a reproduction device 2X that reproduces 3D content is described with reference to the flowchart of Fig. 11. The processing of Fig. 11 is carried out when 3D content is provided from the recording device 1, after the processing of Fig. 10 has been carried out.

In step S11, the reproduction device 2X reads out and executes a navigation command. That is, the acquisition unit 101 reads out a navigation command from the recording medium 23 of the recording device 1 in the case where the 3D content has been provided by way of a USB cable, and from the removable media 5 in the case where the 3D content has been provided by way of the removable media 5. Furthermore, the CPU of the controller 104 executes the navigation command read out by the acquisition unit 101. The reproduction control unit 132 is realized by the navigation command being executed.

In step S12, the reproduction control unit 132 acquires the value of the MVC flag set by means of the processing of Fig. 10.

In step S13, the reproduction control unit 132 determines whether or not the value of the MVC flag is 1.

In the case where, in step S13, it is determined that the value of the MVC flag is 1, namely that the decoding of H.264/MPEG-4 MVC encoded data of at least either one of 1080/60i and 1080/50i is supported, processing advances to step S14. In step S14, the reproduction control unit 132 sets a stereoscopic image output mode as the output mode of the reproduction device 2X.

In step S15, the reproduction control unit 132 controls the decoder 102X, and causes H.264/MPEG-4 MVC encoded data to be decoded in accordance with a playlist for stereoscopic images read out by the acquisition unit 101.

In step S16, the reproduction control unit 132 controls the display control unit 103X, and causes the start of the output of stereoscopic images obtained by the decoding performed by the decoder 102X.

On the other hand, in the case where, in step S13, it is determined that the value of the MVC flag is 0, namely that the decoding of H.264/MPEG-4 MVC encoded data of 1080/60i and 1080/50i is not supported, processing advances to step S17. In step S17, the reproduction control unit 132 sets a 2D-image output mode as the output mode of the reproduction device 2X.

In step S18, the reproduction control unit 132 determines whether or not a playlist for 2D reproduction is prepared on media. As described above, in the recording device 1, a playlist for 2D reproduction is generated, and may be recorded on the recording medium 23 or the removable media 5 together with H.264/MPEG-4 MVC encoded data.

In the case where, in step S18, it is determined that a playlist for 2D reproduction is not prepared on media, processing advances to step S19. In step S19, the reproduction control unit 132 controls the decoder 102X, and causes the base-view video stream included in H.264/MPEG-4 MVC encoded data to be decoded in accordance with the playlist for stereoscopic images.

In step S20, the reproduction control unit 132 controls the display control unit 103X, and causes the start of the output of L images, namely 2D images, obtained by the decoding performed by the decoder 102X.

On the other hand, in the case where, in step S18, it is determined that a playlist for 2D reproduction is prepared on media, processing advances to step S21. In step S21, the reproduction control unit 132 controls the decoder 102X, and causes the base-view video stream included in H.264/MPEG-4 MVC encoded data to be decoded in accordance with the playlist for 2D reproduction. L images obtained by decoding are output in step S20.

When the reproduction of stereoscopic images or 2D images has finished, the reproduction control unit 132 causes processing to finish.

The case where the processing of Fig. 11 is carried out by the reproduction device 2 of Fig. 5 is considered.

Since 1 is set as the value of the MVC flag due to the processing of Fig. 10 having been carried out, in step S13, it is determined that the value of the MVC flag is 1. Furthermore, in step S14, the stereoscopic image output mode is set. In step S15, the decoding of H.264/MPEG-4 MVC encoded data is carried out by the MVC decoder 102 in accordance with the playlist for stereoscopic images, and, in step S16, the output of stereoscopic images is started.

As described above, as a result of having set the MVC flag, the reproduction device 2X is able to control the reproduction of 3D content acquired from the recording device 1, in accordance with the capabilities of the reproduction device 2X itself.

### Example 2.

The operation of a reproduction device 2X that sets an MVC flag in consideration of also the display capabilities of a display device 3X, and carries out the reproduction of 3D content is described.

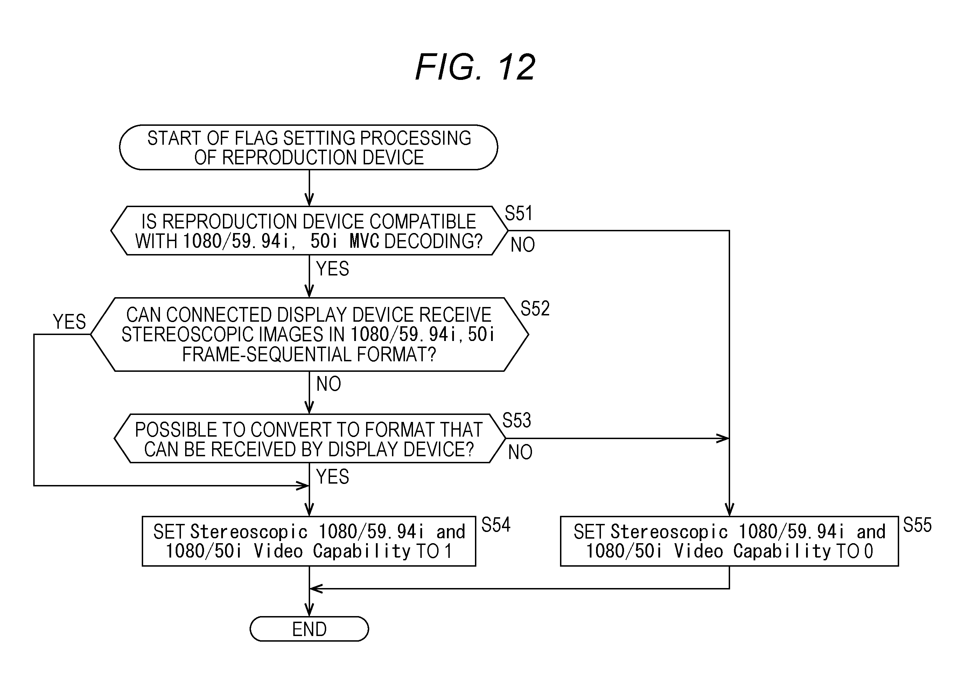

Other processing of the reproduction device 2X that sets the MVC flag is described with reference to the flowchart of Fig. 12.

In step S51, the setting unit 131 of the reproduction device 2X confirms the functions of the decoder 102X, and determines whether or not the decoding of H.264/MPEG-4 MVC encoded data of at least either one of 1080/60i and 1080/50i is supported.

In the case where, in step S51, it is determined that the reproduction device 2X is compatible with the decoding of H.264/MPEG-4 MVC encoded data of at least either one of 1080/60i and 1080/50i, processing advances to step S52. In step S52, the setting unit 131 determines whether or not the display device 3X connected to the reproduction device 2X is capable of receiving and displaying stereoscopic images in the frame sequential format of 1080/60i and 1080/50i. This determination is carried out on the basis of information indicating the display capabilities of the display device 3X acquired from the display device 3X as a result of communication being carried out with the display device 3X.

In the case where, in step S52, it is determined that the display device 3X cannot receive stereoscopic images in the frame sequential format of 1080/60i and 1080/50i, processing advances to step S53. In step S53, the setting unit 131 confirms the functions of the display control unit 103X, and determines whether or not it is possible to carry out format conversion to stereoscopic images having a format that can be received by the display device 3X.

In the case where, in step S53, it is determined that it is possible to carry out format conversion to stereoscopic images having a format that can be received by the display device 3X, in step S54, the setting unit 131 sets the MVC flag to 1.

Likewise, also in the case where, in step S52, it is determined that the display device 3X is able to receive and display stereoscopic images in the frame sequential format of 1080/60i and 1080/50i, in step S54, the MVC flag is set to 1.

On the other hand, in the case where, in step S51, it is determined that the reproduction device 2X is not compatible with the decoding of H.264/MPEG-4 MVC encoded data of 1080/60i and 1080/50i, in step S55, the setting unit 131 sets the MVC flag to 0.

Likewise, also in the case where, in step S53, it is determined that it is not possible to carry out format conversion to stereoscopic images having a format that can be received by the display device 3X, in step S55, the MVC flag is set to 0. After a value has been set to the MVC flag, processing is finished.

The case where the processing of Fig. 12 is carried out by the reproduction device 2 of Fig. 5 is considered.

In this case, in step S51, it is determined that the decoding of H.264/MPEG-4 MVC encoded data of at least either one of 1080/60i and 1080/50i is supported.

Furthermore, in step S52, it is determined that the display device 3 connected to the reproduction device 2 is capable of displaying stereoscopic images in the frame sequential format of 1080/60i and 1080/50i, and, in step S54, 1 is set as the value of the MVC flag.

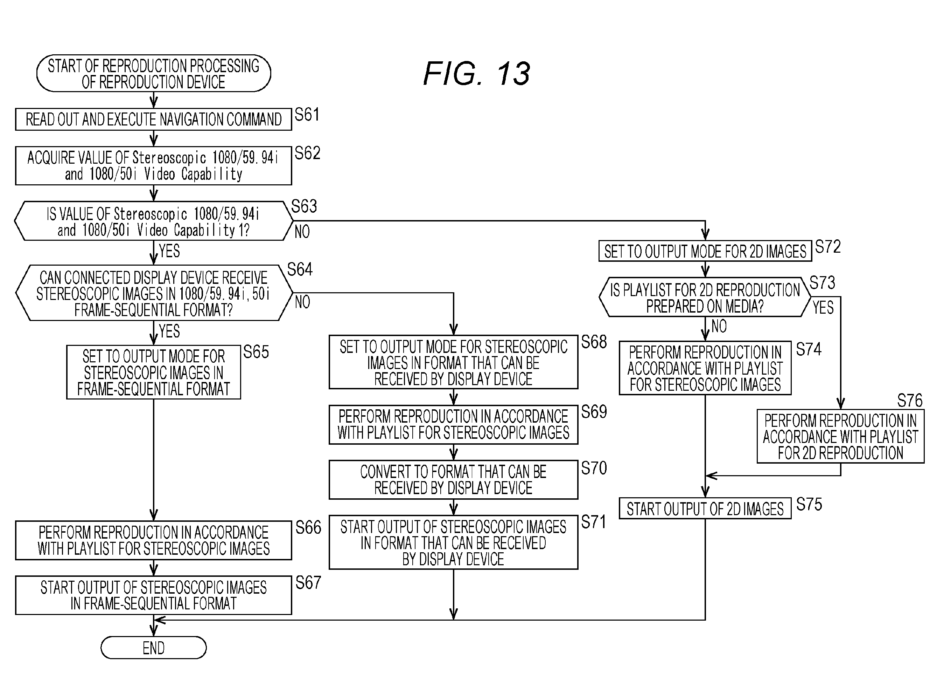

Next, other processing of a reproduction device 2X that reproduces 3D content is described with reference to the flowchart of Fig. 13. The processing of Fig. 13 is carried out when 3D content is provided from the recording device 1, after the processing of Fig. 12 has been carried out.

In step S61, the reproduction device 2X reads out and executes a navigation command. That is, the acquisition unit 101 reads out a navigation command from the recording medium 23 of the recording device 1 in the case where the 3D content has been provided by way of a USB cable, and from the removable media 5 in the case where the 3D content has been provided by way of the removable media 5. Furthermore, the CPU of the controller 104 executes the navigation command read out by the acquisition unit 101. The reproduction control unit 132 is realized by the navigation command being executed.

In step S62, the reproduction control unit 132 acquires the value of the MVC flag set by means of the processing of Fig. 12.

In step S 63, the reproduction control unit 132 determines whether or not the value of the MVC flag is 1.

In the case where, in step S63, it is determined that the value of the MVC flag is 1, namely that the decoding of H.264/MPEG-4 MVC encoded data of at least either one of 1080/60i and 1080/50i is supported, processing advances to step S64. In step S64, the reproduction control unit 132 determines whether or not the display device 3X connected to the reproduction device 2X is capable of receiving and displaying stereoscopic images in the frame sequential format of 1080/60i and 1080/50i. This determination is carried out on the basis of information indicating the display capabilities of the display device 3X acquired from the display device 3X as a result of communication being carried out with the display device 3X.

In the case where, in step S64, it is determined that the display device 3X is capable of receiving and displaying stereoscopic images in the frame sequential format of 1080/60i and 1080/50i, processing advances to step S65. In step S65, the reproduction control unit 132 sets the frame sequential-format stereoscopic image output mode as the output mode for the reproduction device 2X.

In step S66, the reproduction control unit 132 controls the decoder 102X, and causes H.264/MPEG-4 MVC encoded data to be decoded in accordance with the playlist for stereoscopic images.

In step S67, the reproduction control unit 132 controls the display control unit 103X, and causes the start of the output of stereoscopic images in the frame sequential format obtained by the decoding performed by the decoder 102X.

On the other hand, in the case where, in step S64, it is determined that the display device 3X cannot receive stereoscopic images in the frame sequential format of 1080/60i and 1080/50i, processing advances to step S68. In step S68, the reproduction control unit 132 sets, as the output mode for the reproduction device 2X, the output mode of stereoscopic images in the side-by-side format, which is a format that the display device 3X is capable of receiving.

In step S69, the reproduction control unit 132 controls the decoder 102X, and causes H.264/MPEG-4 MVC encoded data to be decoded in accordance with the playlist for stereoscopic images.

In step S70, the reproduction control unit 132 controls the display control unit 103X, and causes stereoscopic images in the frame sequential format obtained by the decoding performed by the decoder 102X to be converted to stereoscopic images in the 720p side-by-side format.

In step S71, the reproduction control unit 132 controls the display control unit 103X, and causes the start of the output of stereoscopic images in the 720p side-by-side format.

On the other hand, in the case where, in step S63, it is determined that the value of the MVC flag is 0, namely that the decoding of H.264/MPEG-4 MVC encoded data of 1080/60i and 1080/50i is not supported, processing advances to step S72. In step S72, the reproduction control unit 132 sets the 2D-image output mode as the output mode for the reproduction device 2X.

In step S73, the reproduction control unit 132 determines whether or not a playlist for 2D reproduction has been prepared on media.

In the case where, in step S73, it is determined that a playlist for 2D reproduction has not been prepared on media, processing advances to step S74. In step S74, the reproduction control unit 132 controls the decoder 102X, and causes the base-view video stream included in H.264/MPEG-4 MVC encoded data to be decoded in accordance with the playlist for stereoscopic images.

In step S75, the reproduction control unit 132 controls the display control unit 103X, and causes the start of the output of L images, namely 2D images, obtained by the decoding performed by the decoder 102X.

On the other hand, in the case where, in step S73, it is determined that a playlist for 2D reproduction has been prepared on media, processing advances to step S76. In step S76, the reproduction control unit 132 controls the decoder 102X, and causes the base-view video stream included in H.264/MPEG-4 MVC encoded data to be decoded in accordance with the playlist for 2D reproduction. L images obtained by decoding are output in step S75.

When the reproduction of stereoscopic images or 2D images has finished, the reproduction control unit 132 causes processing to finish.

The case where the processing of Fig. 13 is carried out by the reproduction device 2 of Fig. 5 is considered.

Since 1 is set as the value of the MVC flag due to the processing of Fig. 12 having been carried out, in step S63, it is determined that the value of the MVC flag is 1. Furthermore, in step S64, it is determined that the display device 3 is capable of receiving and displaying stereoscopic images in the frame sequential format of 1080/60i and 1080/50i, and the frame sequential-format stereoscopic image output mode is set in step S65.

In step S66, the decoding of H.264/MPEG-4 MVC encoded data is carried out by the MVC decoder 102 in accordance with the playlist for stereoscopic images, and, in step S67, the output of stereoscopic images is started.

As described above, as a result of having set the MVC flag in advance, the reproduction device 2X is able to control the reproduction of 3D content acquired from the recording device 1, in accordance with the capabilities of the reproduction device 2X itself. Furthermore, as a result of having set the MVC flag in consideration of also the display capabilities of the display device 3X, the reproduction device 2X is able to supply the display device 3X with images of a format that the display device 3X is capable of receiving.

### <Examples of combinations of devices>

A description is given with regard to a specific example of the setting of the MVC flag in the case where the display capabilities of the display device are taken into consideration.

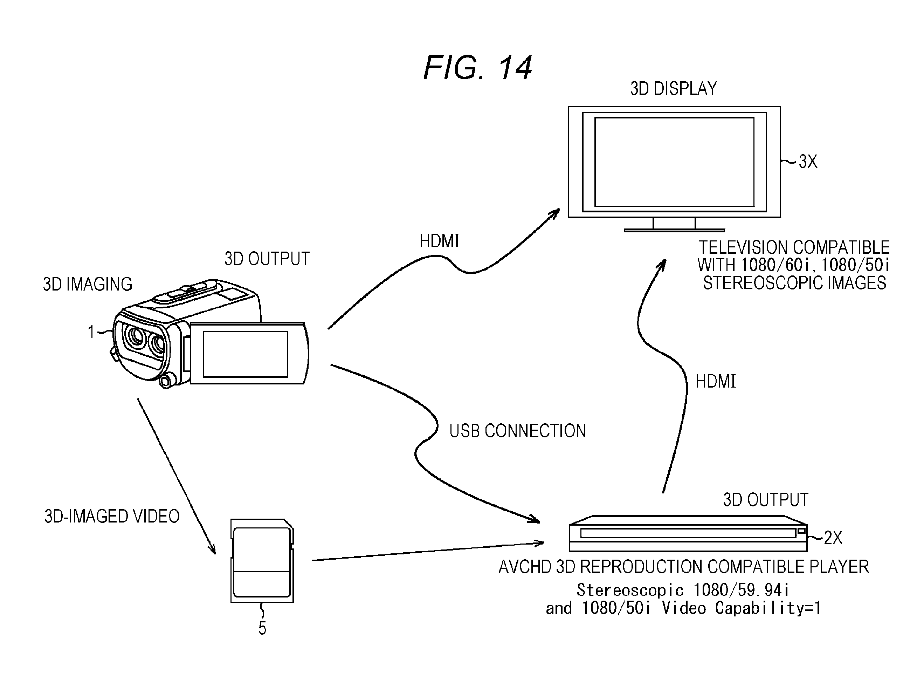

Fig. 14 is a drawing depicting a first example of a combination of devices.

The reproduction device 2X of Fig. 14 is a device that is capable of decoding H.264/MPEG-4 MVC encoded data of at least either one of 1080/60i and 1080/50i. The display device 3X is a device that is compatible with receiving and displaying stereoscopic images in the frame sequential format of 1080/60i and 1080/50i.

The capturing of stereoscopic images is carried out in the recording device 1. 3D content generated by the recording device 1 is supplied to the reproduction device 2X by way of the USB cable or by way of the removable media 5. The recording device 1 has the same configuration as the configuration of Fig. 5 as well as the configuration of Fig. 3, and operates as a recording/reproduction device.

In this case, the reproduction device 2X sets 1 as the value of the MVC flag (step S54 of Fig. 12). Furthermore, when 3D content captured by the recording device 1 is reproduced, the reproduction device 2X decodes H.264/MPEG-4 MVC encoded data in response to the value of 1 being set to the MVC flag, and outputs stereoscopic images in the frame sequential format of 1080/60i or 1080/50i to the display device 3X (steps S66 and S67 of Fig. 13).

The display device 3X receives the stereoscopic images supplied from the reproduction device 2X, and alternately displays L images and R images.

As with the reproduction device 2X, the recording device 1 decodes H.264/MPEG-4 MVC encoded data, and causes stereoscopic images in the frame sequential format of 1080/60i or 1080/50i to be displayed on the display device 3X, which is connected by way of a HDMI cable.

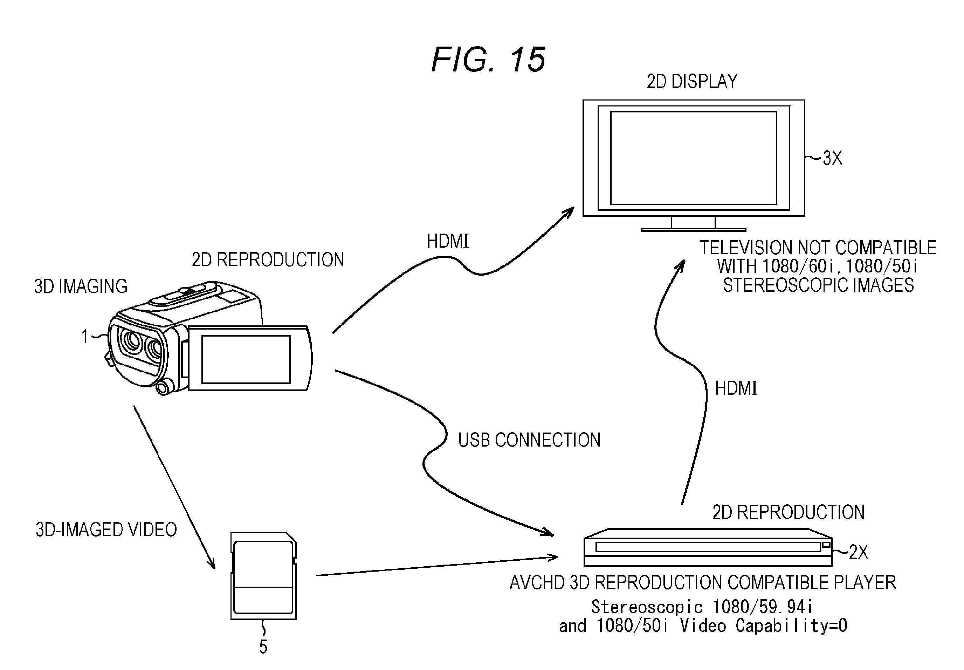

Fig. 15 is a drawing depicting a second example of a combination of devices.

The reproduction device 2X of Fig. 15 is a device that is capable of decoding H.264/MPEG-4 MVC encoded data of at least either one of 1080/60i and 1080/50i. The display device 3X is a device that is not compatible with receiving and displaying stereoscopic images in the frame sequential format of 1080/60i and 1080/50i. In this example, the display device 3X is a device that is also not compatible with receiving and displaying stereoscopic images in the 720p side-by-side format.

The capturing of stereoscopic images is carried out in the recording device 1. 3D content generated by the recording device 1 is supplied to the reproduction device 2X by way of the USB cable or by way of the removable media 5. The recording device 1 has the same configuration as the configuration of Fig. 5 as well as the configuration of Fig. 3, and operates as a recording/reproduction device.

In this case, the reproduction device 2X sets 0 as the value of the MVC flag (step S55 of Fig. 12). Furthermore, when 3D content captured by the recording device 1 is reproduced, the reproduction device 2X decodes the base-view video stream included in H.264/MPEG-4 MVC encoded data, in response to the value of 0 being set to the MVC flag, and in accordance with a playlist for stereoscopic images or a playlist for 2D reproduction, and outputs 2D images to the display device 3X (steps S74, S75, and S76 of Fig. 13).

The display device 3X receives and displays the 2D images supplied from the reproduction device 2X.

As with the reproduction device 2X, the recording device 1 decodes the base-view video stream included in H.264/MPEG-4 MVC encoded data, and causes 2D images to be displayed on the display device 3X.

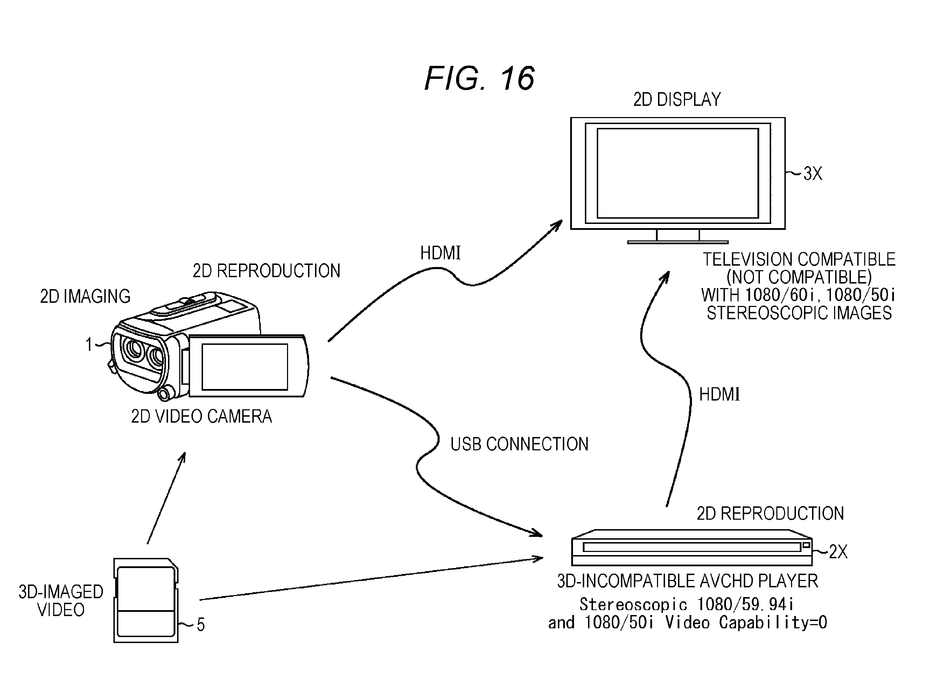

Fig. 16 is a drawing depicting a third example of a combination of devices.

The reproduction device 2X of Fig. 16 is a device that is not capable of decoding H.264/MPEG-4 MVC encoded data of 1080/60i and 1080/50i. The display device 3X is a device that is either compatible with or is not compatible with receiving and displaying stereoscopic images in the frame sequential format of 1080/60i and 1080/50i.

Furthermore, the recording device 1 functions as a 2D image video camera, and the capturing of 2D images is carried out. The recording device 1 has the same configuration as the configuration of Fig. 5 as well as the configuration of Fig. 3, and operates as a recording/reproduction device. 3D content captured by another recording device is provided to the recording device 1 and the reproduction device 2X by using the removable media 5.

In this case, the reproduction device 2X sets 0 as the value of the MVC flag (step S55 of Fig. 12). Furthermore, when 3D content recorded on the removable media 5 is reproduced, the reproduction device 2X decodes the base-view video stream included in H.264/MPEG-4 MVC encoded data, in response to the value of 0 being set to the MVC flag, and in accordance with a playlist for stereoscopic images or a playlist for 2D reproduction, and outputs 2D images to the display device 3X (steps S74, S75, and S76 of Fig. 13).

The display device 3X receives and displays the 2D images supplied from the reproduction device 2X.

When 3D content recorded on the removable media 5 is reproduced, the recording device 1, as with the reproduction device 2X, decodes the base-view video stream included in H.264/MPEG-4 MVC encoded data, and causes 2D images to be displayed on the display device 3X.

### [Exemplary configuration of a computer]

The aforementioned series of processing can also be executed by hardware, or can also be executed by software. In the case where the series of processing is executed by software, a program constituting that software is installed from a program recording medium onto a computer that is incorporated in dedicated hardware, or a general-purpose personal computer or the like.

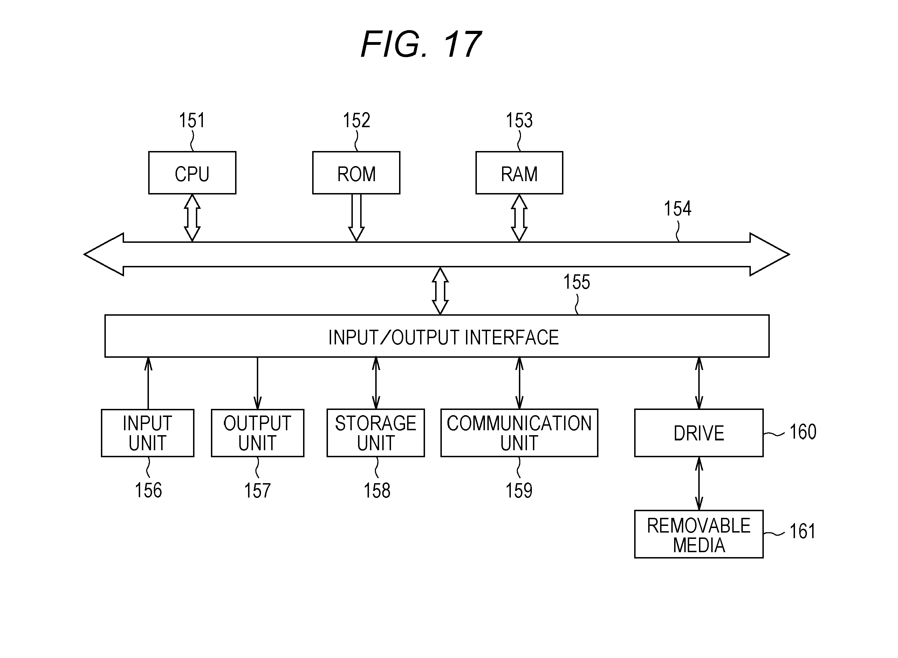

Fig. 17 is a block diagram depicting an exemplary configuration of computer hardware in which the aforementioned series of processing is executed by a program.

A CPU (central processing unit) 151, a ROM (read-only memory) 152, and a RAM (random-access memory) 153 are connected to each other by means of a bus 154.

In addition, an input/output interface 155 is connected to the bus 154. An input unit 156 configured from a keyboard or a mouse or the like, and an output unit 157 configured from a display or a speaker or the like are connected to the input/output interface 155. Furthermore, a storage unit 158 configured from a hard disk or a nonvolatile memory or the like, a communication unit 159 configured from a network interface or the like, and a drive 160 that drives removable media 161 are connected to the input/output interface 155.

In a computer configured as described above, the CPU 151, for example, loads a program stored in the storage unit 158 onto the RAM 153 via the input/output interface 155 and the bus 154 and executes the program, and the aforementioned series of processing is thus carried out.

The program executed by the CPU 151 is stored on the removable media 161 for example, or is provided via a wired or wireless transmission medium such as a local area network, the Internet, or a digital broadcast, and is installed in the storage unit 158.

It should be noted that a program executed by the computer may be a program with which processing is carried out in a time-series manner according to a sequence described in the present specification, or may be a program with which processing is carried out in parallel or at a necessary timing such as when a call is made.

The embodiments of the present technology are not restricted to the aforementioned embodiments, and various alterations are possible within a scope that does not deviate from the purpose of the present technology.

### [Example of a combined configuration]

The present technology can also have a configuration such as the following.
(1) A reproduction device including:
   a setting unit which sets a value to a flag that indicates whether or not the reproduction device itself is a device that is capable of decoding H.264/MPEG-4 MVC encoded data; and
   a reproduction control unit which controls reproduction of H.264/MPEG-4 MVC encoded data in accordance with the value of the flag, and outputs, to a display device, images obtained by reproduction.
(2) The reproduction device according to (1), wherein
   the flag is information of 1 bit, and
   the setting unit
   sets a value of 0 to the flag in the case where the reproduction device itself is a device that is not capable of decoding H.264/MPEG-4 MVC encoded data, and
   sets a value of 1 to the flag in the case where the reproduction device itself is a device that is capable of decoding H.264/MPEG-4 MVC encoded data.
(3) The reproduction device according to (1) or (2), further including a decoding unit that is compatible with H.264/MPEG-4 MVC,
   wherein, in the case where the value of the flag indicates being a device that is capable of decoding H.264/MPEG-4 MVC encoded data, the reproduction control unit causes H.264/MPEG-4 MVC encoded data to be decoded by the decoding unit.
(4) The reproduction device according to (1) or (2), further including a decoding unit that is not compatible with H.264/MPEG-4 MVC and is compatible with H.264/AVC,
   wherein, in the case where the value of the flag indicates being a device that is not capable of decoding H.264/MPEG-4 MVC encoded data, the reproduction control unit causes a base-view video stream included in H.264/MPEG-4 MVC encoded data to be decoded by the decoding unit.
(5) The reproduction device according to any of (1) to (4), wherein, in the case where the reproduction device itself is a device that is capable of decoding H.264/MPEG-4 MVC encoded data, and the display device is a device that is capable of receiving stereoscopic images in a frame sequential format, the setting unit sets, to the flag, a value indicating being a device that is capable of decoding H.264/MPEG-4 MVC encoded data.
(6) The reproduction device according to (5), wherein, in the case where the reproduction device itself is a device that is capable of decoding H.264/MPEG-4 MVC encoded data, but the display device is a device that is not capable of displaying stereoscopic images in the frame sequential format, when the reproduction device itself is capable of converting stereoscopic images in the frame sequential format to stereoscopic images of a predetermined format that the display device is able to receive, the setting unit sets, to the flag, a value indicating being a device that is capable of decoding H.264/MPEG-4 MVC encoded data.
(7) The reproduction device according to (6), further including:
   a decoding unit that is compatible with H.264/MPEG-4 MVC; and
   a conversion unit that converts stereoscopic images in the frame sequential format to stereoscopic images of the predetermined format,
   wherein, in the case where the value of the flag indicates being a device that is capable of decoding H.264/MPEG-4 MVC encoded data, the reproduction control unit causes H.264/MPEG-4 MVC encoded data to be decoded by the decoding unit, and causes stereoscopic images in the frame sequential format obtained by means of the decoding performed by the decoding unit to be converted to stereoscopic images of the predetermined format by the conversion unit.
(8) The reproduction device according to any of (1) to (7), further including an acquisition unit which acquires H.264/MPEG-4 MVC encoded data from an imaging device that captures stereoscopic images and encodes the captured stereoscopic images by means of H.264/MPEG-4 MVC,
   wherein the reproduction control unit controls reproduction of H.264/MPEG-4 MVC encoded data acquired by the acquisition unit.
(9) A reproduction method including steps in which
   a value is set to a flag that indicates whether or not a reproduction device itself is a device that is capable of decoding H.264/MPEG-4 MVC encoded data,
   reproduction of H.264/MPEG-4 MVC encoded data is controlled in accordance with the value of the flag, and
   images obtained by reproduction are output to a display device.
(10) A program which causes a computer to execute processing that includes steps in which
   a value is set to a flag that indicates whether or not a reproduction device itself is a device that is capable of decoding H.264/MPEG-4 MVC encoded data,
   reproduction of H.264/MPEG-4 MVC encoded data is controlled in accordance with the value of the flag, and
   images obtained by reproduction are output to a display device.

### REFERENCE SIGNS LIST

- 1: Recording device
- 2: Reproduction device
- 3: Display device
- 101: Acquisition unit
- 102: MVC decoder
- 103: Display control unit
- 104: Controller
- 104A: Register
- 131: Setting unit
- 132: Reproduction control unit

## Claims

1. A reproduction device comprising:
a setting unit which sets a value to a flag that indicates whether or not the reproduction device itself is a device that is capable of decoding H.264/MPEG-4 MVC encoded data; and
a reproduction control unit which controls reproduction of H.264/MPEG-4 MVC encoded data in accordance with the value of the flag, and outputs, to a display device, images obtained by reproduction.

2. The reproduction device according to claim 1, wherein
the flag is information of 1 bit, and
the setting unit
sets a value of 0 to the flag in the case where the reproduction device itself is a device that is not capable of decoding H.264/MPEG-4 MVC encoded data, and
sets a value of 1 to the flag in the case where the reproduction device itself is a device that is capable of decoding H.264/MPEG-4 MVC encoded data.

3. The reproduction device according to claim 1, further comprising a decoding unit that is compatible with H. 264/MPEG-4 MVC,
wherein, in the case where the value of the flag indicates being a device that is capable of decoding H.264/MPEG-4 MVC encoded data, the reproduction control unit causes H.264/MPEG-4 MVC encoded data to be decoded by the decoding unit.

4. The reproduction device according to claim 1, further comprising a decoding unit that is not compatible with H.264/MPEG-4 MVC and is compatible with H.264/AVC,
wherein, in the case where the value of the flag indicates being a device that is not capable of decoding H.264/MPEG-4 MVC encoded data, the reproduction control unit causes a base-view video stream included in H.264/MPEG-4 MVC encoded data to be decoded by the decoding unit.

5. The reproduction device according to claim 1, wherein, in the case where the reproduction device itself is a device that is capable of decoding H.264/MPEG-4 MVC encoded data, and the display device is a device that is capable of receiving stereoscopic images in a frame sequential format, the setting unit sets, to the flag, a value indicating being a device that is capable of decoding H.264/MPEG-4 MVC encoded data.

6. The reproduction device according to claim 5, wherein, in the case where the reproduction device itself is a device that is capable of decoding H.264/MPEG-4 MVC encoded data, but the display device is a device that is not capable of displaying stereoscopic images in the frame sequential format, when the reproduction device itself is capable of converting stereoscopic images in the frame sequential format to stereoscopic images of a predetermined format that the display device is able to receive, the setting unit sets, to the flag, a value indicating being a device that is capable of decoding H.264/MPEG-4 MVC encoded data.

7. The reproduction device according to claim 6, further comprising:
a decoding unit that is compatible with H.264/MPEG-4 MVC; and
a conversion unit that converts stereoscopic images in the frame sequential format to stereoscopic images of the predetermined format,
wherein, in the case where the value of the flag indicates being a device that is capable of decoding H.264/MPEG-4 MVC encoded data, the reproduction control unit causes H.264/MPEG-4 MVC encoded data to be decoded by the decoding unit, and causes stereoscopic images in the frame sequential format obtained by means of the decoding performed by the decoding unit to be converted to stereoscopic images of the predetermined format by the conversion unit.

8. The reproduction device according to claim 1, further comprising an acquisition unit which acquires H.264/MPEG-4 MVC encoded data from an imaging device that captures stereoscopic images and encodes the captured stereoscopic images by means of H.264/MPEG-4 MVC,
wherein the reproduction control unit controls reproduction of H.264/MPEG-4 MVC encoded data acquired by the acquisition unit.

9. A reproduction method including steps in which
a value is set to a flag that indicates whether or not a reproduction device itself is a device that is capable of decoding H.264/MPEG-4 MVC encoded data,
reproduction of H.264/MPEG-4 MVC encoded data is controlled in accordance with the value of the flag, and
images obtained by reproduction are output to a display device.

10. A program which causes a computer to execute processing that includes steps in which
a value is set to a flag that indicates whether or not a reproduction device itself is a device that is capable of decoding H.264/MPEG-4 MVC encoded data,
reproduction of H.264/MPEG-4 MVC encoded data is controlled in accordance with the value of the flag, and
images obtained by reproduction are output to a display device.
